# EUROPÄISCHE PATENTSCHRIFT

(11) **EP 3 159 191 B1**
(45) Veröffentlichungstag und Bekanntmachung des Hinweises auf die Patenterteilung: **20.06.2018**
(21) Anmeldenummer: 16194732.0
(22) Anmeldetag: 20.10.2016
(51) Int. Cl.: B60C 23/00, A01D 75/28

(54) **SYSTEM ZUR BEEINFLUSSUNG EINER FAHRZEUGLAGE**
SYSTEM FOR INFLUENCING A VEHICLE ALIGNMENT
SYSTÈME DESTINÉ À INFLUENCER L'ALIGNEMENT D'UN VÉHICULE

(30) Priorität: 23.10.2015 DE 102015220743
(43) Veröffentlichungstag der Anmeldung: 26.04.2017
(73) Patentinhaber: Deere & Company, Moline, IL 61265 (US)
(72) Erfinder: Schott, Florian, 36325 Feldatal (DE); Reinmuth, Florian, 74889 Sinsheim (DE)
(74) Vertreter: Dehnhardt, Florian Christopher

(56) Entgegenhaltungen:
- WO-A1-2010/071489
- DE-A1- 10 227 484
- DE-A1- 10 329 937
- DE-T2- 60 130 611
- DE-T5-112009 003 587
- US-A1- 2014 343 802
- US-B1- 6 290 019

## Beschreibung

Die vorliegende Erfindung betrifft ein System zur Beeinflussung einer Fahrzeuglage insbesondere beim Befahren eines geneigten Untergrunds, mit einem Fahrzeugaufbau mit linken und rechten Rädern sowie einer Reifenfüllanlage zur radindividuellen Beaufschlagung zugehöriger Reifen mit einem vorgebbaren Reifenfülldruck.

In diesem Zusammenhang ist aus der WO 2010/071489 A1 ein System zur Kippstabilisierung eines Arbeitsfahrzeugs bekannt, bei dem beim Entlangfahren an einem geneigten Hang durch Herstellung einer entsprechenden Druckdifferenz zwischen linken und rechten Reifen des Arbeitsfahrzeugs ein zugehöriger Fahrzeugaufbau hangaufwärts gegenüber dem Untergrund und damit entgegen einer bestehenden Kipptendenz des Arbeitsfahrzeugs geneigt wird.

Eine Verwendung des bekannten Systems im landwirtschaftlichen Bereich ist nicht ohne weiteres möglich, da die im Zuge der Kippstabilisierung hergestellte Querneigung des Fahrzeugaufbaus gegenüber dem Untergrund für den Einsatz vieler landwirtschaftlicher Bearbeitungsgeräte problematisch ist.

Es ist daher Aufgabe der vorliegenden Erfindung, ein System der eingangs genannten Art dahingehend weiterzubilden, dass dieses an eine Verwendung im landwirtschaftlichen Bereich angepasst ist.

Diese Aufgabe wird durch ein System mit den Merkmalen des Patentanspruchs 1 gelöst.

Das System zur Beeinflussung einer Fahrzeuglage insbesondere beim Befahren eines geneigten Untergrunds umfasst einen Fahrzeugaufbau mit linken und rechten Rädern sowie eine Reifenfüllanlage zur radindividuellen Beaufschlagung zugehöriger Reifen mit einem vorgebbaren Reifenfülldruck. Eine Sensoreinrichtung ermittelt eine Querneigung des Fahrzeugaufbaus gegenüber einem befahrenen und/oder zu befahrenden Untergrund und stellt eine die ermittelte Querneigung wiedergebende Querneigungsgröße bereit, wobei die bereitgestellte Querneigungsgröße einer Kontrolleinheit zuführt wird. Die Kontrolleinheit passt den für die linken und rechten Räder vorgebbaren Reifenfülldruck durch Ansteuerung der Reifenfüllanlage nach Maßgabe der zugeführten Querneigungsgröße derart an, dass der Fahrzeugaufbau im Sinne einer Verringerung der ermittelten Querneigung gegenüber dem befahrenen und/oder zu befahrenden Untergrund verkippt wird.

Das System trägt dem Umstand Rechnung, dass der Fahrzeugaufbau bei Fahrten entlang eines Hangs eine erhöhte Tendenz aufweist, sich hangabwärts zu neigen. Dies ist nicht nur bei Verwendung gefederter Radaufhängungen der Fall, sondern gerade auch beim Befahren eines weichen bzw. nachgiebigen Untergrunds, da hier die hangabwärts gerichteten Räder naturgemäß tiefer einsinken als die hangaufwärts gerichteten Räder. Um einer solchen Neigungstendenz des Fahrzeugaufbaus entgegenzuwirken, ermittelt die Kontrolleinheit daher, ob die durch die Querneigungsgröße repräsentierte Abweichung von der Parallellage des Fahrzeugaufbaus gegenüber dem Untergrund innerhalb eines zulässigen Toleranzbereichs liegt. Ist dies nicht der Fall, so veranlasst die Kontrolleinheit durch entsprechende Ansteuerung der Reifenfülldruckanlage eine Erhöhung des Reifenfülldrucks auf der hangabwärts gerichteten Seite und/oder eine Erniedrigung des Reifenfülldrucks auf der hangaufwärts gerichteten Seite, sodass der Fahrzeugaufbau zur Reduzierung der Querneigung hangaufwärts gekippt wird. Dieser Vorgang erfolgt solange, bis die aus der (von der Sensoreinrichtung zu diesem Zweck kontinuierlich aktualisierten) Querneigungsgröße abgeleitete Abweichung von der Parallellage wieder innerhalb ihres zulässigen Toleranzbereichs liegt.

Eine Verwendung des erfindungsgemäßen Systems bietet sich insbesondere im Zusammenhang mit landwirtschaftlichen Traktoren an, denn die Einhaltung der Parallellage ist für viele der daran anbringbaren landwirtschaftlichen Bearbeitungsgeräte Voraussetzung für eine einwandfreie Funktion. Dies gilt beispielsweise bei Verwendung einer an dem landwirtschaftlichen Traktor angebrachten Feldspritze oder eines Düngerstreuers, da nur dann das Spritzmittel oder Streugut gleichmäßig auf die Feldoberfläche ausgebracht wird.

Weitere vorteilhafte Ausgestaltungen des erfindungsgemäßen Systems gegen aus den Unteransprüchen hervor.

Bezüglich der Sensoreinrichtung sind unterschiedliche Ausbildungen denkbar. Soll der zu befahrende Untergrund vorausschauend erfasst werden, so können diese bildgebende Sensormittel wie beispielsweise einen Laserscanner, eine Stereokamera oder dergleichen umfassen, die den vorausliegenden Untergrundverlauf abtasten sowie aus den gewonnenen Bilddaten die Querneigung des Fahrzeugaufbaus gegenüber dem abgetasteten Untergrundabschnitt ermitteln. Eine vorausschauende Erfassung des zu befahrenden Untergrunds hat den Vorteil, dass sich die Reaktionsträgheit der Reifenfüllanlage insofern berücksichtigen lässt, als die Anpassung des Reifenfülldrucks bereits frühzeitig vor Erreichen des abgetasteten Untergrundanschnitts initiiert werden kann und genügend Zeit für die Durchführung des Befüll- und/oder Entleervorgangs verbleibt.

Werden keine allzu hohen Anforderungen an die Regelgüte des Systems gestellt, so kann der Einfachheit halber auch eine Erfassung des gegenwärtig befahrenen Untergrunds mittels von der Sensoreinrichtung umfassten abstandserfassenden Sensormitteln erfolgen, die beispielsweise zwei in Querrichtung des Fahrzeugaufbaus beabstandet angeordnete Ultraschall- oder Radarsensoren aufweisen, deren Erfassungsbereich in Richtung eines unterhalb des Fahrzeugaufbaus verlaufenden Untergrundabschnitts orientiert ist. Durch Differenzbildung der mittels der Ultraschall- bzw. Radarsensoren erfassten Einzelabstände lässt sich dann unschwer die Querneigung des Fahrzeugaufbaus gegenüber dem befahrenen Untergrund ermitteln.

Ist eine unmittelbare Erfassung des Untergrundverlaufs nicht möglich, so ist es des Weiteren vorstellbar, dass die Sensoreinrichtung einen dem Fahrzeugaufbau zugeordneten Neigungssensor zur Erfassung einer ersten absoluten Querneigung des Fahrzeugaufbaus gegenüber der Erdhorizontalen aufweist, wobei diese zur Bereitstellung der Querneigungsgröße mit einer aus positionsabhängigen Geoinformationen eines satellitengestützten Navigationssystems ermittelten zweiten absoluten Querneigung des befahrenen Untergrunds gegenüber der Erdhorizontalen in Beziehung gesetzt wird. Der dem Fahrzeugaufbau zugeordnete Neigungssensor kann beispielsweise nach dem gyroskopischen Prinzip arbeiten. Da die meisten modernen landwirtschaftlichen Traktoren ohnehin über satellitengestützte Navigationssysteme verfügen, bietet sich deren kostengünstige Mitnutzung an.

Um den Fahrer auf kritische Fahrsituationen hinzuweisen, ist es möglich, dass die Kontrolleinheit die Ausgabe einer Fahrerinformation veranlasst, sofern die ermittelte Querneigung die durch Anpassung des Reifenfülldrucks erzielbare Verkippung des Fahrzeugaufbaus übersteigt und daher eine erhöhte Kippgefahr besteht. Die Ausgabe der Fahrerinformation erfolgt beispielsweise durch Ansteuerung eines Displays und/oder einer akustischen Warneinheit.

Das erfindungsgemäße System zur Beeinflussung einer Fahrzeuglage beim Befahren eines geneigten Untergrunds wird im Folgenden anhand der beigefügten Zeichnungen näher erläutert.

Dabei sind hinsichtlich ihrer Funktion übereinstimmende bzw. vergleichbare Bauteile mit denselben Bezugszeichen gekennzeichnet. Es zeigen:
- Fig. 1: ein als landwirtschaftlicher Traktor ausgebildetes Fahrzeug beim Entlangfahren an einem Abhang,
- Fig. 2: ein als Blockschaltbild dargestelltes Ausführungsbeispiel des erfindungsgemäßen Systems.

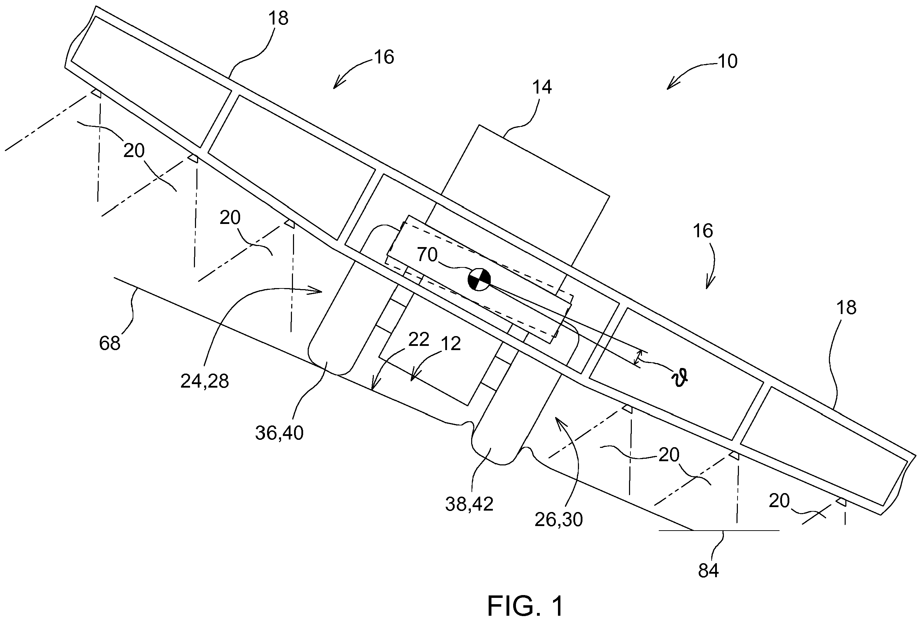

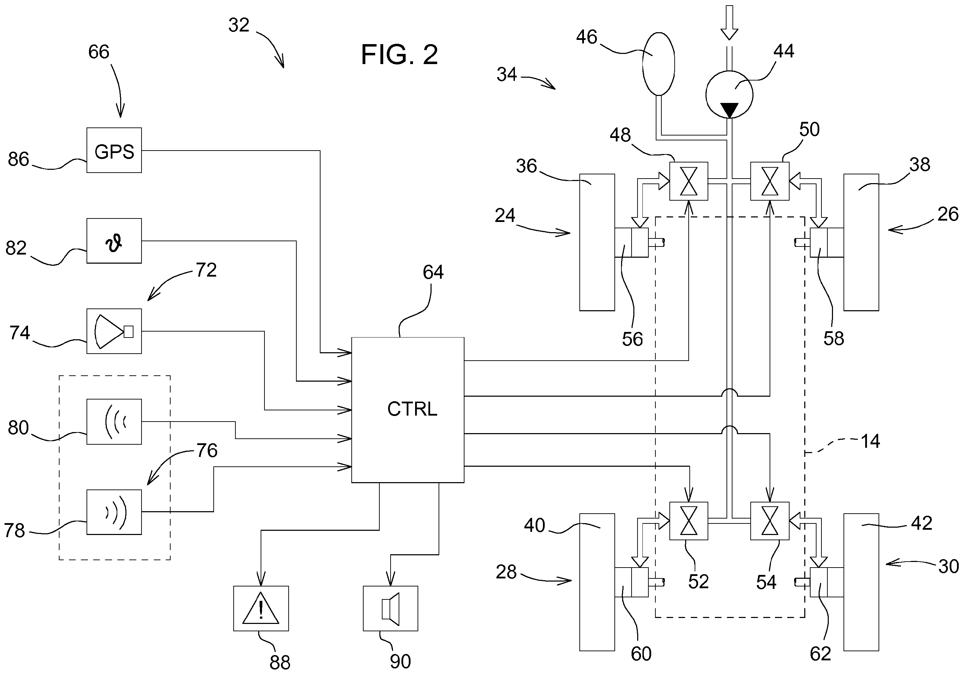

Das erfindungsgemäße System zur Beeinflussung einer Fahrzeuglage soll nachfolgend unter Bezugnahme auf das in Fig. 1 dargestellte Fahrzeug beschrieben werden, wobei sich weitere Einzelheiten aus dem in Fig. 2 wiedergegebenen Blockschaltbild ergeben.

Bei dem Fahrzeug handelt es sich beispielsgemäß um einen landwirtschaftlichen Traktor 10, der entlang eines Abhangs 12 fährt sowie ein an einem Fahrzeugaufbau 14 heckseitig angebrachtes landwirtschaftliches Bearbeitungsgerät in Gestalt einer Feldspritze 16 mit einem sich seitwärts erstreckenden Spritzgestänge 18 zur Ausbringung von Spritzmittel 20 auf eine Feldoberfläche 22 trägt.

Der Fahrzeugaufbau 14 weist linke und rechte Vorderräder 24, 26 sowie linke und rechte Hinterräder 28, 30 auf. Ein an den linken und rechten Vorderrädern 24, 26 einstellbarer Lenkeinschlag ist mittels eines von dem landwirtschaftlichen Traktor 10 umfassten (nicht dargestellten) Lenksystems fahrerseitig beeinflussbar.

Gemäß Fig. 2 weist das System 32 eine zentrale Reifenfüllanlage 34 auf. Die zentrale Reifenfüllanlage 34 erlaubt eine radindividuelle Beaufschlagung zugehöriger Reifen 36, 38, 40, 42 mit einem vorgebbaren Reifenfülldruck. Die zentrale Reifenfüllanlage 34 umfasst zu diesem Zweck einen als Schraubenkompressor ausgebildeten Luftkompressor 44 zur Speisung eines Druckluftreservoirs 46 sowie den Reifen 36, 38, 40, 42 jeweils zugeordnete Steuerventile 48, 50, 52, 54, die über zwischenliegende Drehdurchführungen 56, 58, 60, 62 ein Befüllen bzw. Entleeren des betreffenden Reifens 36, 38, 40, 42 erlauben. Zur Steuerung des Luftkompressors 44 sowie der Steuerventile 48, 50, 52, 54 dient eine mikroprozessorgesteuerte Kontrolleinheit 64.

Eine Sensoreinrichtung 66 ermittelt eine Querneigung des Fahrzeugaufbaus 14 gegenüber dem befahrenen und/oder zu befahrenden Untergrund 68, und stellt eine die ermittelte Querneigung wiedergebende Querneigungsgröße ζ bereit, die der Kontrolleinheit 64 zur weiteren Auswertung zugeführt wird.

Gemäß Fig. 1 weist der Fahrzeugaufbau 14 eine Tendenz auf, sich hangabwärts zu neigen. Dies ist nicht nur bei der Verwendung gefederter Radaufhängungen der Fall, sondern gerade auch beim Befahren eines weichen bzw. nachgiebigen Untergrunds 68 (beispielsgemäß der zu bearbeitenden Feldoberfläche 22), da hier die abwärts gerichteten Räder 26, 30 naturgemäß tiefer einsinken als die hangaufwärts gerichteten Räder 24, 28. Dies führt dazu, dass der Fahrzeugaufbau 14 wie auch das Spritzgestänge 18 gegenüber dem Untergrund 68 geneigt sind, mithin die erforderliche Parallellage nicht länger gegeben ist. Dies kann zu einer ungleichmäßigen Ausbringung des Spritzmittels 20 auf die Feldoberfläche 22 führen.

Um einer solchen Neigungstendenz des Fahrzeugaufbaus 14 entgegenzuwirken, ermittelt die Kontrolleinheit 64 daher, ob die durch die bereitgestellte Querneigungsgröße ζ repräsentierte Abweichung von der Parallellage des Fahrzeugaufbaus 14 gegenüber dem Untergrund 68 innerhalb eines zulässigen Toleranzbereichs liegt. Ist dies nicht der Fall, so veranlasst die Kontrolleinheit 64 durch entsprechende Ansteuerung der zentralen Reifenfüllanlage 34 bzw. der dieser zugeordneten Steuerventile 48, 50, 52, 54 eine Erhöhung des Reifenfülldrucks auf der hangabwärts gerichteten Seite und/oder eine Erniedrigung des Reifenfülldrucks auf der hangaufwärts gerichteten Seite, sodass der Fahrzeugaufbau 14 zur Reduzierung der Querneigung um seinen Schwerpunkt 70 hangaufwärts gekippt wird. Dieser Befüll- und/oder Entleervorgang erfolgt solange, bis die aus der Querneigungsgröße ζ abgeleitete Abweichung von der Parallellage wieder innerhalb ihres zulässigen Toleranzbereichs liegt. Die Querneigungsgröße ζ wird hierzu von der Sensoreinrichtung 66 kontinuierlich aktualisiert.

Allgemein gesprochen passt die Kontrolleinheit 64 den für die linken und rechten Räder 24, 26, 28, 30 vorgebbaren Reifenfülldruck durch Ansteuerung der zentralen Reifenfüllanlage 34 nach Maßgabe der zugeführten Querneigungsgröße ζ derart an, dass der Fahrzeugaufbau 14 im Sinne einer Verringerung der ermittelten Querneigung gegenüber dem befahrenen und/oder zu befahrenden Untergrund 68 verkippt wird.

Die Sensoreinrichtung 66 ist je nach den an das System 32 gestellten Anforderungen unterschiedlich ausgebildet.

Soll der zu befahrende Untergrund 68 vorausschauend erfasst werden, so umfasst die Sensoreinrichtung 66 bildgebende Sensormittel 72 in Gestalt eines Laserscanners oder einer Stereokamera 74. Der Laserscanner bzw. die Stereokamera 74 ist im Frontbereich des landwirtschaftlichen Traktors 10 angebracht, um den vorausliegenden Untergrundverlauf abzutasten sowie aus den gewonnenen Bilddaten die Querneigung des Fahrzeugaufbaus 14 gegenüber dem abgetasteten Untergrundabschnitt zu ermitteln. Die vorausschauende Erfassung des zu befahrenden Untergrunds 68 erlaubt es, dass sich die Reaktionsträgheit der zentralen Reifenfüllanlage 34 insofern berücksichtigen lässt, als die Anpassung des Reifenfülldrucks bereits frühzeitig vor Erreichen des abgetasteten Untergrundabschnitts initiiert wird und genügend Zeit für die Durchführung des Befüll- und/oder Entleervorgangs verbleibt. Optional erfolgt mittels des Laserscanners oder der Stereokamera 74 eine Bestimmung der Untergrundbeschaffenheit durch Auswertung charakteristischer Reflexionseigenschaften der Untergrundoberfläche. Dies erlaubt es unter anderem, den Umfang eines Einsinkens der hangabwärts gerichteten Räder 26, 30 des landwirtschaftlichen Traktors 10 abzuschätzen sowie den Initiierungszeitpunkt des Befüll- und/oder Entleervorgangs dementsprechend zu variieren.

Werden keine allzu hohen Anforderungen an die Regelgüte des Systems 32 gestellt, so erfolgt alternativ eine Erfassung des gegenwärtig befahrenen Untergrunds 68 mittels von der Sensoreinrichtung 66 umfassten abstandserfassenden Sensormitteln 76. Diese weisen zwei in Querrichtung des Fahrzeugaufbaus 14 beabstandet angeordnete Ultraschall- oder Radarsensoren 78, 80 auf, deren Erfassungsbereich in Richtung eines unterhalb des Fahrzeugaufbaus 14 verlaufenden Untergrundabschnitts orientiert ist. Die Sensoreinrichtung 66 ermittelt hierbei die Querneigung des Fahrzeugaufbaus 14 gegenüber dem Untergrund 68 durch Differenzbildung der solchermaßen erfassten Einzelabstände.

Ist eine unmittelbare Erfassung des Untergrundverlaufs nicht möglich, so weist die Sensoreinrichtung 66 alternativ einen dem Fahrzeugaufbau 14 zugeordneten Neigungssensor 82 zur Erfassung einer ersten absoluten Querneigung des Fahrzeugaufbaus 14 gegenüber der Erdhorizontalen 84 auf, wobei diese zur Bereitstellung der Querneigungsgröße ζ mit einer aus positionsabhängigen Geoinformationen eines satellitengestützten Navigationssystems 86 ermittelten zweiten absoluten Querneigung des befahrenen Untergrunds 68 gegenüber der Erdhorizontalen 84 verglichen bzw. in Beziehung gesetzt wird. Der dem Fahrzeugaufbau 14 zugeordnete Neigungssensor 82 arbeitet hierbei nach dem gyroskopischen Prinzip. Die Ermittlung der Querneigung erfolgt somit letztlich aufgrund einer Differenzbetrachtung der beiden absoluten Querneigungen.

Um den Fahrer auf kritische Fahrsituationen hinzuweisen, veranlasst die Kontrolleinheit 64 zusätzlich die Ausgabe einer Fahrerinformation, sofern die ermittelte Querneigung die durch Anpassung des Reifenfülldrucks erzielbare Verkippung des Fahrzeugaufbaus 14 übersteigt und daher eine erhöhte Kippgefahr besteht. Die Ausgabe der Fahrerinformation erfolgt dabei durch Ansteuerung eines Displays 88 und/oder einer akustischen Warneinheit 90.

## Patentansprüche

1. System zur Beeinflussung einer Fahrzeuglage insbesondere beim Befahren eines geneigten Untergrunds, mit einem Fahrzeugaufbau (14) mit linken und rechten Rädern (26, 26, 28, 30) sowie einer Reifenfüllanlage (34) zur radindividuellen Beaufschlagung zugehöriger Reifen (36, 38, 40, 42) mit einem vorgebbaren Reifenfülldruck, **dadurch gekennzeichnet, dass** eine Sensoreinrichtung (66) eine Querneigung des Fahrzeugaufbaus (14) gegenüber einem befahrenen und/oder zu befahrenden Untergrund (68) ermittelt sowie eine die ermittelte Querneigung wiedergebende Querneigungsgröße (ζ) bereitstellt und einer Kontrolleinheit (64) zuführt, wobei die Kontrolleinheit (64) den für die linken und rechten Räder (24, 26, 28, 30) vorgebbaren Reifenfülldruck durch Ansteuerung der Reifenfüllanlage (34) nach Maßgabe der Querneigungsgröße (ζ) derart anpasst, dass der Fahrzeugaufbau (14) im Sinne einer Verringerung der ermittelten Querneigung gegenüber dem befahrenen und/oder zu befahrenden Untergrund (68) verkippt wird.

2. System nach Anspruch 1, **dadurch gekennzeichnet, dass** die Sensoreinrichtung (66) bildgebende Sensormittel (72) umfasst.

3. System nach Anspruch 1 oder 2, **dadurch gekennzeichnet, dass** die Sensoreinrichtung (66) abstandserfassende Sensormittel (76) umfasst.

4. System nach wenigstens einem der Ansprüche 1 bis 3, **dadurch gekennzeichnet, dass** die Sensoreinrichtung (66) einen dem Fahrzeugaufbau (14) zugeordneten Neigungssensor (82) zur Erfassung einer ersten absoluten Querneigung des Fahrzeugaufbaus (14) gegenüber der Erdhorizontalen (84) aufweist, wobei diese zur Bereitstellung der Querneigungsgröße (ζ) mit einer aus positionsabhängigen Geoinformationen eines satellitengestützten Navigationssystems (86) ermittelten zweiten absoluten Querneigung des befahrenen Untergrunds (68) gegenüber der Erdhorizontalen (84) in Beziehung gesetzt wird.

5. System nach wenigstens einem der Ansprüche 1 bis 4, **dadurch gekennzeichnet, dass** die Kontrolleinheit (64) die Ausgabe einer Fahrerinformation veranlasst, sofern die ermittelte Querneigung die durch Anpassung des Reifenfülldrucks erzielbare Verkippung des Fahrzeugaufbaus (14) übersteigt.

## Claims

1. System for influencing a position of a vehicle, in particular when traveling on an inclined underlying surface, having a vehicle body (14) with left-hand and right-hand wheels (26, 26, 28, 30) and a tyre inflation system (34) for wheel-specific supply of associated tyres (36, 38, 40, 42) with a predefinable tyre inflation pressure, **characterized in that** a sensor device (66) determines a lateral inclination of the vehicle body (14) with respect to an underlying surface (68) which is being travelled on and/or is to be travelled on, and makes available a lateral inclination variable (ξ) which represents the determined lateral inclination and feeds it to a monitoring unit (64), wherein the monitoring unit (64) adapts the tyre inflation pressure, which can be predefined for the left-hand and right-hand wheels (24, 26, 28, 30) by actuating the tyre inflation system (34) according to the lateral inclination variable (ξ) in such a way that the vehicle body (14) is tilted for the purpose of reducing the determined lateral inclination with respect to the underlying surface (68) which is being travelled on and/or is to be travelled on.

2. System according to Claim 1, **characterized in that** the sensor device (66) comprises image-generating sensor means (72).

3. System according to Claim 1 or 2, **characterized in that** the sensor device (66) comprises distance-detecting sensor means (76).

4. System according to at least one of Claims 1 to 3, **characterized in that** the sensor device (66) has an inclination sensor (82) which is assigned to the vehicle body (14) and has the purpose of detecting a first absolute lateral inclination of the vehicle body (14) with respect to the earth's horizontal (84), wherein, in order to make available the lateral inclination variable (ξ), said first absolute lateral inclination is related to a second absolute lateral inclination of the underlying surface (68) being travelled on, with respect to the earth's horizontal (84), said second absolute lateral inclination having been obtained from position-dependent geoinformation of a satellite-assisted navigation system (86).

5. System according to at least one of Claims 1 to 4, **characterized in that** the monitoring unit (64) brings about the outputting of driver information in so far as the lateral inclination which has been obtained exceeds the tilting of the vehicle body (14) which can be achieved by adapting the tyre inflation pressure.

## Revendications

1. Système destiné à agir sur la position d'un véhicule, en particulier lorsqu'il se déplace sur un sol en pente, le véhicule présentant un châssis (14) doté de roues gauches et de roues droites (26, 26, 28, 30) ainsi qu'une installation (34) de gonflage des bandages de roues qui applique individuellement sur les bandages de roues (36, 38, 40, 42) associés aux roues une pression prédéterminée de remplissage de bandage de roue, **caractérisé en ce que**
un dispositif de capteurs (66) détermine l'inclinaison transversale du châssis (14) du véhicule par rapport au sol (68) qui a été parcouru ou qui doit être parcouru et délivre une grandeur (ζ) d'inclinaison transversale qui représente l'inclinaison transversale qui a été saisie et l'apporte à une unité de contrôle (64), l'unité de contrôle (64) adaptant la pression de gonflage des bandages de roues prédéterminée pour les roues gauches et les roues droites (24, 26, 28, 30) en commandant l'installation (34) de gonflage des bandages de roue en fonction de la grandeur (ζ) d'inclinaison transversale de telle sorte que le châssis (14) du véhicule soit incliné par rapport au sol (68) parcouru et/ou à parcourir dans le sens d'une diminution de l'inclinaison transversale qui a été déterminée.

2. Système selon la revendication 1, **caractérisé en ce que** le dispositif de capteurs (66) comporte des moyens de capteur (72) formant des images.

3. Système selon les revendications 1 ou 2, **caractérisé en ce que** le dispositif de capteurs (66) comporte des moyens de capteur (76) qui détectent les distances.

4. Système selon au moins l'une des revendications 1 à 3, **caractérisé en ce que** le dispositif de capteurs (66) présente un capteur d'inclinaison (82) associé au châssis (14) du véhicule et qui saisit une première inclinaison transversale absolue du châssis (14) du véhicule par rapport à l'horizontale terrestre (84), cette inclinaison étant mise en relation avec une deuxième inclinaison transversale absolue du sol (68) parcouru par rapport à l'horizontale terrestre (84) déterminée à partir de géo-informations de position provenant d'un système de navigation (86) assisté par satellite, en vue de délivrer la grandeur (ζ) d'inclinaison transversale.

5. Système selon au moins l'une des revendications 1 à 4, **caractérisé en ce que** l'unité de contrôle (64) lance l'envoi d'une information à destination du conducteur dès que l'inclinaison transversale qui a été déterminée dépasse l'inclinaison du châssis (14) du véhicule qui peut être obtenue par adaptation de la pression de gonflage des bandages de roue.
